# FASCICULE DE BREVET EUROPEEN

(11) **EP 4 049 386 B1**
(45) Date de publication et mention de la délivrance du brevet: **11.02.2026**
(21) Numéro de dépôt: 20799767.7
(22) Date de dépôt: 08.10.2020
(51) Int. Cl.: H04B 10/116, H04B 10/114

(54) **DISPOSITIF ET MECANISME DE SELECTION AUTOMATIQUE DE LAMPE DE LUMIERE COMMUNICANTE**
VORRICHTUNG UND MECHANISMUS ZUR AUTOMATISCHEN VLC-LAMPENAUSWAHL
DEVICE AND MECHANISM FOR AUTOMATIC VLC-LAMP SELECTION

(30) Priorité: 25.10.2019 FR 1912013
(43) Date de publication de la demande: 31.08.2022
(73) Titulaire: Orange, 92130 Issy-les-Moulineaux (FR)
(72) Inventeur: DUSSAUME, Philippe, 92326 Châtillon Cedex (FR); PERRUFEL, Micheline, 92326 Châtillon Cedex (FR)
(74) Mandataire: Plasseraud IP
(86) Numéro de dépôt international: PCT/FR2020/051779
(87) Numéro de publication internationale: WO 2021/079040

(56) Documents cités:
- US-A1- 2009 310 971
- US-A1- 2011 069 951

## Description

### Domaine technique

L'invention relève du domaine des télécommunications.

Plus particulièrement, l'invention porte sur un dispositif de communication, un procédé d'appairage d'un tel dispositif avec un terminal, un système comprenant un tel dispositif et un terminal, un terminal d'un tel système, un programme informatique pour l'exécution d'un tel procédé, une dalle d'accueil d'un tel dispositif, et une unité centrale d'un tel dispositif.

Les objets de l'invention ont par exemple vocation à être utilisés dans les univers :
- des bureaux ou des guichets, notamment bureaux ouverts, salles de réunion et amphithéâtres,
- des espaces de travail publics comme par exemple les bibliothèques, les salons d'attente, les véhicules, et
- les systèmes de paiement dans les banques et certains commerces.

### Technique antérieure

Actuellement, côté réseau, les dispositifs émetteurs/récepteurs de Lumière Communicante reposant, pour l'émission, sur des lampes LED ou DEL (diode électroluminescente) dans le domaine lumineux ou infrarouge et, pour la réception, sur des photorécepteurs sensibles à l'infrarouge, sont intégrés à des luminaires prenant la forme de plafonniers, de dalles de plafond, de lampadaires ou de lampes de bureau.

Ces dispositifs supportent parfois plusieurs sessions de communication simultanées pour des terminaux, mobiles, tablettes et PC, situés dans le même flux lumineux, et la sécurité des communications réside, au niveau physique, dans l'isolement du local et au niveau de la communication, dans celle des protocoles des niveaux réseau et supérieurs.

Il est cependant des cas où il est souhaitable de permettre à un utilisateur de pouvoir utiliser en toute discrétion une connexion par Lumière Communicante dans un local où d'autres personnes sont susceptibles de circuler.

Une solution évidente consiste à placer les dispositifs de Lumière Communicante, terminal et réseau, dans un contenant opaque à la lumière visible et infrarouge, mais cela ne convient pas aux terminaux avec interface de Lumière Communicante intégrée, dont les écrans et claviers doivent rester accessibles aux utilisateurs.

Une autre solution consiste à utiliser un plan de travail avec dispositif de Lumière Communicante réseau intégré au plan et tourné vers le haut, et à utiliser, côté terminal, soit un dispositif de Lumière Communicante situé en face arrière, soit par exemple, pour les PC, un dispositif de Lumière Communicante retournable pour l'orienter vers le bas.

Cette seconde solution demande cependant, si l'on veut respecter les impératifs de confidentialité de l'échange au niveau physique, que l'on résolve le dilemme suivant :
- le dispositif d'émission/réception côté réseau doit être de taille réduite, afin de ne pas excéder la taille du terminal utilisateur ou le cas échéant de son dispositif de Lumière Communicante externe, et
- le dispositif d'émission/réception côté réseau doit par ailleurs lui être positionné précisément en vis-à-vis du terminal utilisateur ou le cas échéant de son dispositif de Lumière Communicante externe, donc éventuellement de façon non ergonomique, tout en autorisant de faibles déplacements.

### Résumé

La présente divulgation vient améliorer la situation et vise notamment à résoudre ce dilemme, en apportant la possibilité de maintenir la confidentialité de communications en Lumière Communicante (correspondant à une communication optique en espace libre selon les revendications) entre un point d'accès réseau et des terminaux usuels, tout en autorisant le déplacement de ceux-ci.

Pour cela, il est proposé, selon un aspect, un dispositif de communication comportant :
- une dalle d'accueil comprenant une pluralité de photorécepteurs et une pluralité de sources lumineuses inter-jacentes avec les photorécepteurs, la pluralité de photorécepteurs et la pluralité de sources lumineuses étant adaptés pour une communication optique en espace libre, et
- une unité centrale, raccordée à la dalle d'accueil, où l'unité centrale est configurée pour, lorsqu'une partie de la pluralité de photorécepteurs de la dalle d'accueil reçoit un signal lumineux d'au moins une source lumineuse d'une interface de communication optique en espace libre d'un terminal non appairé avec la dalle d'accueil :
- obtenir un signal d'initialisation comprenant une identification de ladite partie de la pluralité de photorécepteurs,
- sélectionner, parmi la pluralité de sources lumineuses de la dalle d'accueil, une partie de la pluralité de sources lumineuses à proximité immédiate de ladite partie de la pluralité de photorécepteurs, sur la base de ladite identification,
- commander une émission d'un signal d'appairage par ladite partie de la pluralité de sources lumineuses,
- obtenir un signal de réponse, indicatif d'un signal émis par ladite interface de communication optique en espace libre dudit terminal en réponse à l'émission du signal d'appairage et reçu par ladite partie de la pluralité de photorécepteurs de la dalle d'accueil, et
- commander un appairage dudit terminal à ladite partie de la pluralité de photorécepteurs de la dalle d'accueil et à ladite partie de la pluralité de sources lumineuses de la dalle d'accueil sur la base du signal de réponse.

Par « terminal appairé », il est entendu un terminal associé, par une configuration spécifique du dispositif de communication et/ou du terminal, de manière à communiquer exclusivement avec une zone spécifique de la dalle d'accueil.

Cette zone spécifique de la dalle d'accueil, qui est ainsi, réciproquement, appairée au terminal, comprend une partie de la pluralité de photorécepteurs et une partie de la pluralité de sources lumineuses de la dalle d'accueil.

Il est présupposé que l'interface de communication optique en espace libre du terminal comprend au moins :
- un photorécepteur ou groupe de photorécepteurs (par exemple un capteur photo ou vidéo), et
- une source lumineuse ou groupe de sources lumineuses (par exemple un flash).

Il est en outre présupposé que ladite source lumineuse est adjacente audit photorécepteur, c'est-à-dire espacée dudit photorécepteur d'une distance par exemple inférieure à 5 cm.

Par « terminal non appairé », il est entendu un terminal n'étant pas couramment associé, par une configuration spécifique du dispositif de communication et/ou du terminal, de manière à communiquer exclusivement avec une zone spécifique de la dalle d'accueil.

Grâce à la commande de l'appairage dudit terminal à ladite partie de la pluralité de photorécepteurs de la dalle d'accueil et à ladite partie de la pluralité de sources lumineuses de la dalle d'accueil, le terminal, initialement non appairé, devient appairé.

Les termes « une pluralité de sources lumineuses inter-jacentes avec les photorécepteurs » sont à comprendre de la manière développée ci-dessous.

Les photorécepteurs de la pluralité de photorécepteurs sont répartis, individuellement ou en groupes, dans un premier plan. Par exemple, si la répartition est effectuée selon un pas uniforme, la pluralité de photorécepteurs forme un réseau de photorécepteurs. Les photorécepteurs de la pluralité de photorécepteurs sont orientés pour recevoir des signaux lumineux issus d'une première direction normale au premier plan.

Par exemple, en considérant arbitrairement le premier plan comme horizontal, les photorécepteurs sont alors orientés pour recevoir des signaux lumineux issus d'une direction verticale, par exemple du haut vers le bas.

Les sources lumineuses de la pluralité de sources lumineuses sont réparties, individuellement ou en groupes. Par exemple, si la répartition est effectuée selon un pas uniforme, la pluralité de sources lumineuses forme un réseau de sources lumineuses. Les sources lumineuses de la pluralité de sources lumineuses sont orientées pour émettre des signaux lumineux dans une deuxième direction opposée à ladite première direction.

En reprenant l'exemple précédent où le premier plan horizontal et les photorécepteurs sont orientés pour recevoir des signaux lumineux du haut vers le bas, les sources lumineuses sont alors orientées pour émettre des signaux lumineux dans une direction verticale du bas vers le haut.

Dans un mode de réalisation, les sources lumineuses de la pluralité de sources lumineuses peuvent être réparties, individuellement ou en groupes, dans le premier plan.

Alternativement, les sources lumineuses de la pluralité de sources lumineuses peuvent être réparties, individuellement ou en groupes, dans un deuxième plan sensiblement parallèle au premier plan. La position de chaque source lumineuse ou groupe de sources lumineuses dans le deuxième plan peut alors être assimilée à la projection orthogonale de leur position dans le premier plan.

Les sources lumineuses sont « inter-jacentes avec les photorécepteurs » en ce que la dalle d'accueil peut être subdivisée dans le premier plan en une pluralité de zones comprenant chacune à la fois :
- une partie de la pluralité de photorécepteurs, et
- une partie de la pluralité de sources lumineuses ou les projections orthogonales dans le premier plan des positions d'une partie de la pluralité de sources lumineuses.

Par exemple, les photorécepteurs peuvent former un réseau de photorécepteurs individuels ou un réseau de groupes de photorécepteurs et les sources lumineuses peuvent former un réseau de sources lumineuses individuelles, ou un réseau de groupes de sources lumineuses, enchevêtré avec le réseau de photorécepteurs individuels ou de groupes de photorécepteurs.

Ainsi, chaque zone de la dalle d'accueil ainsi définie peut être simultanément appairée à un terminal distinct et former un canal de communication en Lumière Communicante distinct.

Le signal d'initialisation obtenu par l'unité centrale est un signal permettant à l'unité centrale :
- d'identifier qu'un terminal apte à communiquer par Lumière Communicante est positionné par rapport à la dalle d'accueil de manière à échanger des informations par Lumière Communicante avec au moins une partie des sources lumineuses et des photorécepteurs présents sur la dalle d'accueil, et, surtout,
- d'identifier, parmi la pluralité de sources lumineuses de la dalle d'accueil, la partie de la pluralité de sources lumineuses apte à transmettre des informations au terminal ainsi positionné, et
- d'identifier, parmi la pluralité de photorécepteurs présents sur la dalle d'accueil, la partie de la pluralité de photorécepteurs apte à recevoir des informations émises par le terminal ainsi positionné.

Ainsi, l'unité centrale détecte le ou les photorécepteurs recevant le signal d'initialisation et peut par exemple évaluer un positionnement du terminal relativement à la dalle d'accueil sur la base du signal d'initialisation transmis.

De plus, la partie de la pluralité de sources lumineuses apte à transmettre des informations au terminal ainsi positionné peut ainsi être sélectionnée, individuellement ou en groupe, et pilotée pour émettre le signal d'appairage.

De plus, la partie de la pluralité de photorécepteurs apte à recevoir des informations émises par au moins une source lumineuse du terminal ainsi positionné peut ainsi être sélectionnée, individuellement ou en groupe, et pilotée pour recevoir le signal de réponse.

Sélectionner, parmi la pluralité de sources lumineuses de la dalle d'accueil, une partie de la pluralité de sources lumineuses à proximité immédiate de ladite partie de la pluralité de photorécepteurs équivaut à adresser la ou les sources lumineuses à proximité immédiate du ou des photorécepteurs recevant le signal d'initialisation.

Le signal d'appairage émis par la partie de la pluralité de sources lumineuses ainsi sélectionnée permet d'établir une communication avec le terminal.

En particulier, le signal d'appairage émis par la dalle d'accueil pilotée par l'unité centrale permet à un terminal apte à communiquer par Lumière Communicante recevant ce signal :
- de détecter un dispositif de communication, plus précisément d'identifier que le terminal est positionné de manière à échanger des informations par lumière communicante avec ce dispositif de communication, et,
- de recevoir des instructions précisant des modalités de communication, telles que des modalités d'appairage, avec ce dispositif de communication.

Le signal de réponse reçu par la dalle d'accueil et transmis à l'unité centrale permet à l'unité centrale:
- d'obtenir une confirmation de réception par le terminal d'un signal d'appairage précédemment émis par la dalle d'accueil, et , éventuellement :
- d'obtenir une identification, ou une indication de configuration, du terminal,
- d'obtenir une indication de configuration du terminal, et/ou
- de confirmer ou corriger une précédente évaluation du positionnement du terminal relativement à la dalle d'accueil, et /ou
- d'évaluer une qualité de transmission du signal d'appairage, et/ou
- d'obtenir des instructions précisant des modalités de communication, telles que des modalités d'appairage, avec le terminal.

Le dispositif de communication peut comprendre en outre un modem raccordé à l'unité centrale, le modem étant configuré pour :
- recevoir la commande d'émission d'un signal d'appairage par l'unité centrale,
- commander l'émission du signal d'appairage par ladite partie de la pluralité de sources lumineuses de la dalle d'accueil, et
- recevoir la commande d'appairage par l'unité centrale.

Ainsi, il est possible de former un canal de communication optique en espace libre dédié à l'appairage d'un ou de plusieurs terminaux à une partie correspondante de la dalle d'accueil, indépendamment de la transmission d'informations vers ou à destination d'un réseau étendu.

Le dispositif de communication peut comprendre en outre une passerelle réseau raccordée à l'unité centrale, la passerelle réseau étant configurée, lorsque la communication réseau entre ledit terminal appairé et la passerelle réseau est autorisée par l'unité centrale, pour :
- former un canal physique de communication optique en espace libre entre ladite partie de la pluralité de photorécepteurs et ledit terminal appairé, et
- établir une communication entre le canal physique de communication optique en espace libre et un réseau étendu WAN.

Ainsi, il est possible de former un canal physique de communication optique en espace libre, communiquant avec un réseau étendu, de manière indépendante d'un canal dédié à l'appairage d'un ou de plusieurs terminaux à une partie correspondante de la dalle d'accueil.

Selon un mode de réalisation, le signal d'appairage est émis dans une première bande de longueur d'onde et le canal physique de communication optique en espace libre est actif dans une deuxième bande de longueur d'onde, la première et la deuxième bandes de longueur d'onde étant mutuellement exclusives.

L'existence de deux canaux de communication optique en espace libre distincts entre les deux entités que sont la dalle d'accueil et le terminal au lieu d'un seul canal commun présente:
- un avantage de sécurité, en prévenant la transmission d'informations liées à l'appairage vers un réseau étendu, d'autant plus si le modem et la passerelle réseau sont deux équipements distincts et si les bandes de longueur d'onde utilisées par les deux canaux sont mutuellement exclusives, et
- un avantage en termes de fluidité des communications, car les informations relatives à l'appairage transitant sur le canal de communication optique en espace libre dédié à l'appairage n'ont pas substantiellement d'effet indésirable sur le transfert de données à travers le canal physique de communication optique en espace libre communiquant avec le réseau étendu, et inversement.

Il peut être prévu que le terminal appairé et/ou l'unité centrale soit configuré en outre pour confirmer périodiquement l'appairage.

Dans un mode de réalisation, l'unité centrale est en outre configurée pour, le terminal étant appairé à ladite partie de la pluralité de sources lumineuses:
- émettre de manière périodique une commande d'émission d'un signal de confirmation, le signal de confirmation étant identique au signal d'appairage et émis par ladite partie de la pluralité de sources lumineuses.

Ainsi, à la réception du signal de confirmation, le terminal reçoit la confirmation que le canal de communication de communication optique en espace libre est actif. En réponse à la réception du signal de confirmation, le terminal peut émettre un signal de réponse à la confirmation de manière à confirmer à l'unité centrale que le canal de communication de communication optique en espace libre n'a pas évolué.

Ainsi, il est possible de confirmer, à la fois au terminal appairé et à l'unité centrale, si la position du terminal appairé relativement à la dalle d'accueil est inchangée de sorte que le terminal appairé soit toujours apte à communiquer à travers le canal physique en Lumière Communicante.

Il peut être en outre prévu que le terminal soit désappairé en cas d'absence de réception, par l'unité centrale, d'au moins un signal de réponse à une confirmation à l'issue d'un laps de temps prédéterminé.

Dans un mode de réalisation, l'unité centrale est en outre configurée pour, le terminal étant appairé à ladite partie de la pluralité de sources lumineuses:
- émettre de manière périodique une commande d'émission d'un signal de détection de déplacement, le signal de détection étant identique au signal d'appairage et émis par une partie non appairée adjacente à ladite partie de la pluralité de sources lumineuses de la dalle d'accueil.

Ainsi, à la réception du signal de détection de déplacement, le terminal reçoit la confirmation que le canal de communication optique en espace libre est actif. En réponse à la réception du signal de détection de déplacement, le terminal peut émettre un signal de réponse, qui peut être interprété par l'unité centrale comme une indication que le terminal a été déplacé sur la surface de la dalle d'accueil.

Il peut ainsi être prévu que l'unité centrale soit configurée pour :
- obtenir un signal de réponse au signal de détection de déplacement reçu par une partie non appairée de la pluralité de photorécepteurs de la dalle d'accueil adjacente à la partie de la pluralité de photorécepteurs appairée au terminal,
- identifier ladite partie non appairée de la pluralité de photorécepteurs,
- sélectionner une partie non appairée de la pluralité de sources lumineuses de la dalle d'accueil sur la base de ladite identification, et
- modifier l'appairage du terminal sur la base de ladite partie non appairée de la pluralité de photorécepteurs et de ladite partie non appairée de la pluralité de sources lumineuses, de manière à maintenir actif le canal de communication de communication optique en espace libre.

Selon un mode de réalisation, l'unité centrale est en outre configurée pour, le terminal étant appairé à ladite partie de la pluralité de sources lumineuses:
- commander une émission d'un signal d'appairage modifié, différent du signal d'appairage et émis par une partie non appairée de ladite partie de la pluralité de sources lumineuses de la dalle d'accueil.

Ainsi, la dalle d'accueil peut être subdivisée en une pluralité de parties comprenant chacune une partie de la pluralité de photorécepteurs et une partie de la pluralité de sources lumineuses.

De plus, chaque partie de la dalle d'accueil peut être pilotée séparément de manière à émettre un signal d'appairage différent.

Ainsi, chaque partie de la dalle d'accueil peut être simultanément appairée à un terminal différent, formant un canal de communication par Lumière communicante pouvant être établi selon des modalités différentes, de sorte que les données échangées entre chaque terminal appairé et la partie de la dalle d'accueil correspondante ne puissent pas être interceptées par un échange de position de deux terminaux par rapport à la dalle d'accueil.

Un autre aspect de l'invention est un procédé d'appairage d'un terminal à une dalle d'accueil comprenant une pluralité de photorécepteurs et une pluralité de sources lumineuses inter-jacentes avec les photorécepteurs, la pluralité de photorécepteurs et la pluralité de sources lumineuses étant adaptées pour une communication optique en espace libre le procédé comprenant, lorsqu'une partie de la pluralité de photorécepteurs de la dalle d'accueil reçoit un signal lumineux d'au moins une source lumineuse d'une interface de communication optique en espace libre du terminal et que le terminal est non appairé à la dalle d'accueil:
- obtenir un signal d'initialisation comprenant une identification de ladite partie de la pluralité de photorécepteurs,
- sélectionner, parmi la pluralité de sources lumineuses de la dalle d'accueil, une partie de la pluralité de sources lumineuses à proximité immédiate de ladite partie de la pluralité de photorécepteurs, sur la base de ladite identification,
- commander une émission d'un signal d'appairage par ladite partie de la pluralité de sources lumineuses,
- obtenir un signal de réponse, indicatif d'un signal émis par ladite interface de communication optique en espace libre dudit terminal en réponse à l'émission du signal d'appairage et reçu par ladite partie de la pluralité de photorécepteurs de la dalle d'accueil, et
- commander un appairage dudit terminal à ladite partie de la pluralité de photorécepteurs de la dalle d'accueil et à ladite partie de la pluralité de sources lumineuses de la dalle d'accueil sur la base du signal de réponse.

Selon un mode de réalisation, le terminal comprenant en outre un circuit de traitement raccordé à au moins un photorécepteur et à ladite au moins une source lumineuse, le procédé comprend en outre :
- commander, par le circuit de traitement, l'émission du signal lumineux par ladite au moins une source lumineuse du terminal,
- obtenir, par le circuit de traitement, le signal d'appairage par ledit au moins un photorécepteur du terminal, et
- commander, par le circuit de traitement, l'émission du signal de réponse en réponse au signal d'appairage.

Un autre aspect de l'invention est un système comprenant le dispositif précité et un terminal comprenant une interface de communication optique en espace libre.

Selon un mode de réalisation d'un tel système, l'unité centrale est en outre configurée pour, le terminal étant appairé à ladite partie de la pluralité de sources lumineuses:
- émettre de manière périodique une commande d'émission d'un signal de détection de déplacement, le signal de détection étant identique au signal d'appairage et émis par une partie non appairée adjacente à ladite partie de la pluralité de sources lumineuses de la dalle d'accueil.

Un autre aspect de l'invention est un terminal du système précité, le terminal comprenant :
- un circuit de traitement comprenant un processeur connecté à une mémoire, et
- une interface de communication optique en espace libre, raccordée au circuit de traitement, comprenant au moins un photorécepteur et au moins une source lumineuse,
le circuit de traitement étant configuré pour :
- commander l'émission d'un signal lumineux par ladite au moins une source lumineuse,
- obtenir un signal d'appairage par ledit au moins un photorécepteur, et
- commander l'émission d'un signal de réponse en réponse au signal d'appairage.

Ainsi, le terminal est configuré pour émettre à destination du dispositif de communication du système précité les signaux interprétables par l'unité centrale du dispositif de communication pour permettre l'appairage du terminal.

Un autre aspect de l'invention est un programme informatique comportant des instructions pour la mise en œuvre du procédé d'appairage précité, lorsque lesdites instructions sont exécutées par un processeur.

Un autre aspect de l'invention est une dalle d'accueil du dispositif précité, la dalle d'accueil comprenant :
- une pluralité de photorécepteurs orientés pour recevoir des signaux lumineux issus d'une première direction normale à un plan,
- une pluralité de sources lumineuses, inter-jacentes avec les photorécepteurs, orientées pour émettre des signaux lumineux dans une deuxième direction opposée à ladite première direction, et
- une interface de communication avec une unité centrale comprenant un processeur connecté à une mémoire.

Ainsi, lorsque le terminal est positionné en regard de la pluralité de photorécepteurs et de la pluralité de sources lumineuses, il est possible d'initier le procédé d'appairage précité puis d'établir un canal de communication optique en espace libre entre le terminal et la dalle d'accueil, ce canal communiquant avec un réseau étendu.

Un autre aspect de l'invention est une unité centrale du dispositif précité, l'unité centrale comprenant un processeur connecté à une mémoire et à au moins une interface de communication avec une dalle d'accueil, ladite dalle d'accueil comprenant une pluralité de photorécepteurs et une pluralité de sources lumineuses inter-jacentes avec les photorécepteurs, la pluralité de photorécepteurs et la pluralité de sources lumineuses étant adaptées pour une communication optique en espace libre, l'unité centrale étant configurée pour, lorsqu'une partie de la pluralité de photorécepteurs de la dalle d'accueil reçoit un signal lumineux d'au moins une source lumineuse d'une interface de communication optique en espace libre d'un terminal non appairé avec la dalle d'accueil :
- obtenir un signal d'initialisation comprenant une identification de ladite partie de la pluralité de photorécepteurs,
- sélectionner, parmi la pluralité de sources lumineuses de la dalle d'accueil, une partie de la pluralité de sources lumineuses à proximité immédiate de ladite partie de la pluralité de photorécepteurs, sur la base de ladite identification,
- commander une émission d'un signal d'appairage par ladite partie de la pluralité de sources lumineuses,
- obtenir un signal de réponse, indicatif d'un signal émis par ladite interface de communication optique en espace libre dudit terminal en réponse à l'émission du signal d'appairage et reçu par ladite partie de la pluralité de photorécepteurs de la dalle d'accueil, et
- commander un appairage dudit terminal à ladite partie de la pluralité de photorécepteurs de la dalle d'accueil et à ladite partie de la pluralité de sources lumineuses de la dalle d'accueil sur la base du signal de réponse.

### Brève description des dessins

D'autres caractéristiques, détails et avantages apparaîtront à la lecture de la description détaillée ci-après, et à l'analyse des dessins annexés, sur lesquels :
**Fig. 1**

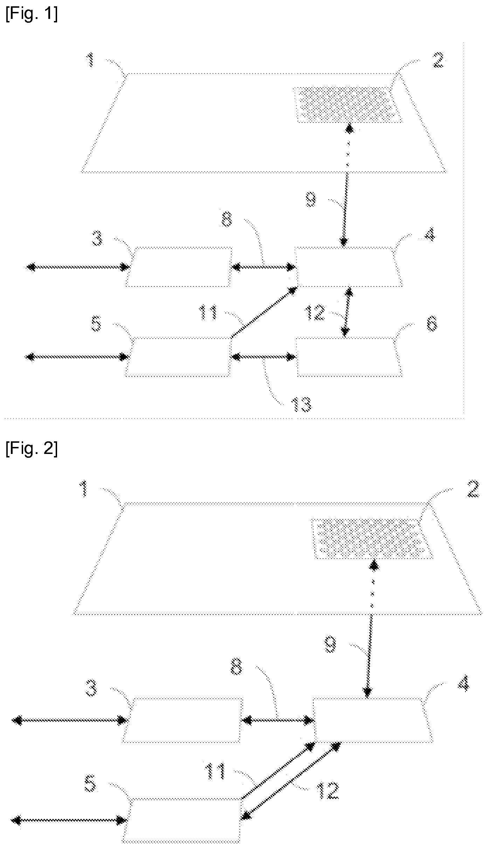

   [Fig. 1] représente de manière schématique les éléments d'un dispositif de communication selon un mode de réalisation.
**Fig. 2**
   [Fig. 2] représente de manière schématique les éléments d'un dispositif de communication selon un mode de réalisation.
**Fig. 3**

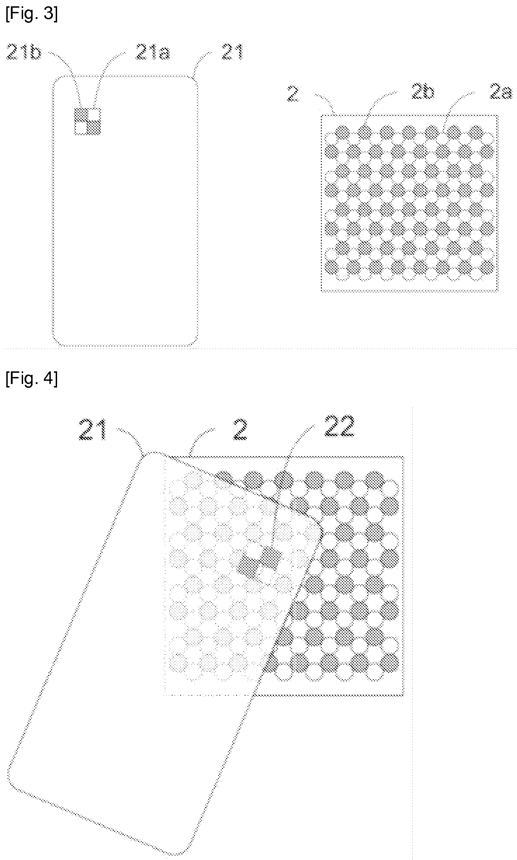

   [Fig. 3] représente de manière schématique une dalle d'accueil et un terminal selon un mode de réalisation.
**Fig. 4**
   [Fig. 4] montre un terminal positionné vis-à-vis d'une dalle d'accueil de manière à en permettre un appairage selon un mode de réalisation.
**Fig. 5**

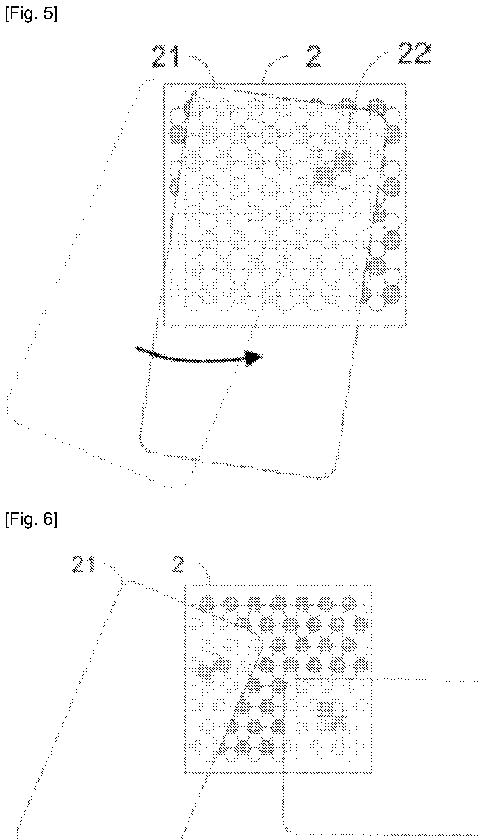

   [Fig. 5] montre un déplacement d'un terminal appairé relativement à une dalle d'accueil selon un mode de réalisation.
**Fig. 6**
   [Fig. 6] montre deux terminaux positionnés vis-à-vis d'une dalle d'accueil de manière à permettre un appairage simultané des deux terminaux selon un mode de réalisation.
**Fig. 7**

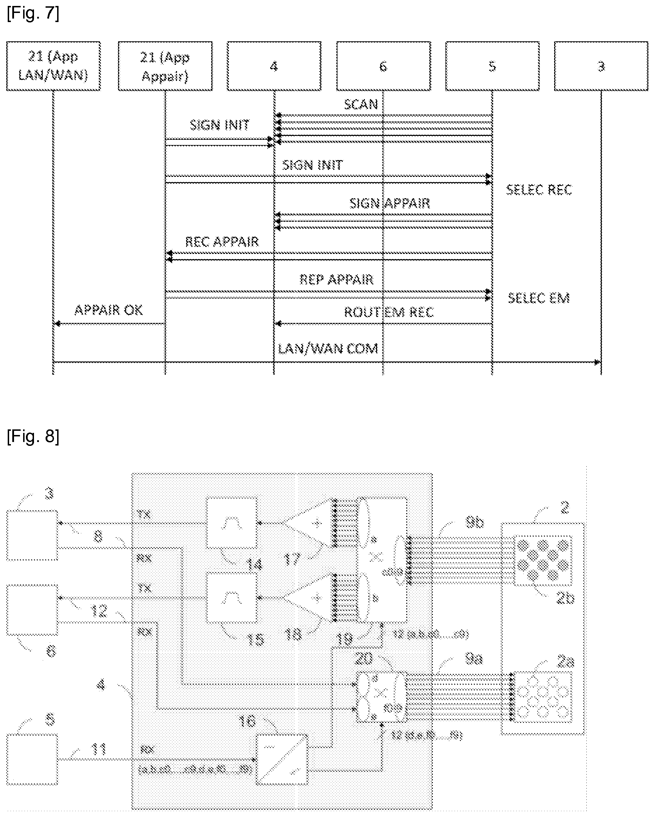

   [Fig. 7] représente de manière schématique un procédé d'appairage selon un mode de réalisation.
**Fig. 8**
   [Fig. 8] représente de manière schématique une architecture d'un routeur selon un mode de réalisation.
**Fig. 9**

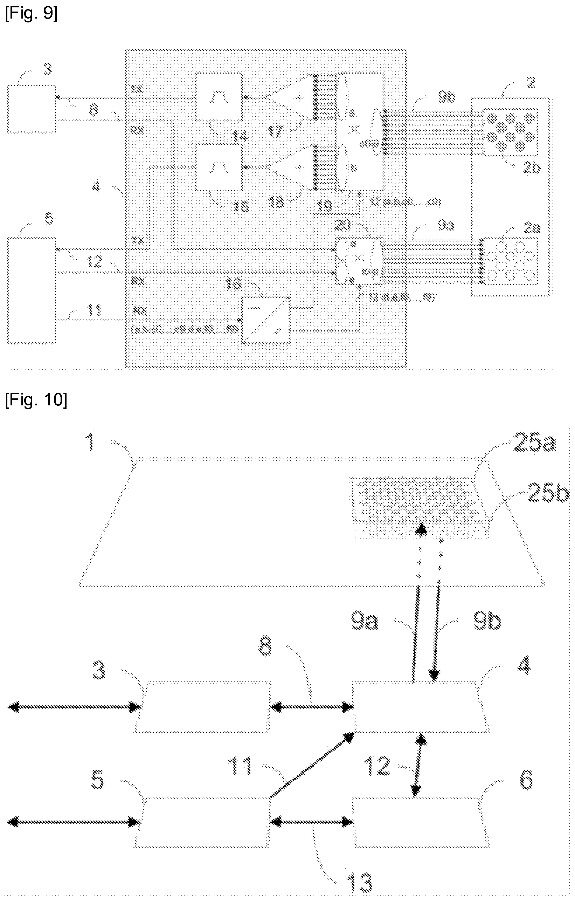

   [Fig. 9] représente de manière schématique une architecture d'un routeur selon un mode de réalisation.
**Fig. 10**
   [Fig. 10] représente de manière schématique les éléments d'un dispositif de communication selon un mode de réalisation.
**Fig. 11**

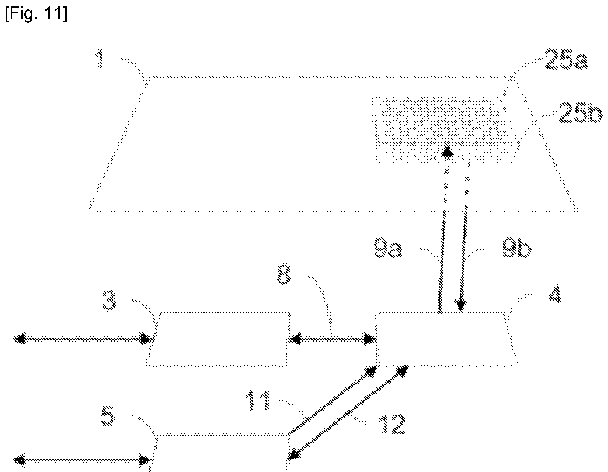

   [Fig. 11] représente de manière schématique les éléments d'un dispositif de communication selon un mode de réalisation.

### Description des modes de réalisation

Les dessins et la description ci-après contiennent, pour l'essentiel, des éléments de caractère certain. Ils pourront donc non seulement servir à mieux faire comprendre la présente divulgation, mais aussi contribuer à sa définition, le cas échéant.

Il est maintenant fait référence à la [Fig. 1], qui représente de manière schématique les éléments d'un exemple de dispositif de communication selon un mode de réalisation de l'invention.

Il est également fait référence à la [Fig. 3] qui représente de manière schématique un exemple de dalle d'accueil d'un tel dispositif de communication et un exemple de terminal apte à communiquer avec un tel dispositif de communication.

Le terme « terminal » peut par exemple désigner un appareil par exemple mobile tel qu'un téléphone mobile multifonction (l'anglicisme « smartphone » peut être utilisé) ou une tablette. Le terme « terminal » peut également désigner par exemple un périphérique pouvant être relié à un tel appareil ou à un ordinateur.

Dans le contexte de l'invention, le terminal est équipé d'une interface de communication par Lumière Communicante qui peut être intégrée au terminal ou se présenter sous la forme d'un périphérique distinct.

Le dispositif de communication comprend une dalle d'accueil 2 qui peut être intégrée, fixée, ou simplement disposée sur une surface d'un plan de travail 1. Ladite surface du plan de travail 1 peut par exemple correspondre à une partie orientable du plan de travail 1 de manière à ne pas nécessairement correspondre au même plan qu'une surface principale du plan de travail 1.

De manière non limitative, le plan de travail 1 peut désigner par exemple une table, une tablette, un bureau ou un élément mural, et peut être situé par exemple dans un bureau, une salle de réunion, un amphithéâtre, un espace de travail, une bibliothèque, un salon d'attente, un véhicule, etc.

La dalle d'accueil 2 peut être conçue de manière à comprendre une surface destinée à accueillir un terminal 21, ou a minima accueillir l'interface de communication du terminal 21.

La dalle d'accueil 2 peut être conçue de sorte qu'un terminal 21, ou l'interface de communication du terminal 21, disposé sur une surface de la dalle d'accueil 2 y soit maintenu sous l'effet de la gravité.

Ainsi, par exemple, la dalle d'accueil 2 peut être conçue de sorte que ladite surface de la dalle d'accueil soit horizontale lorsque la dalle d'accueil 2 est disposée sur une surface d'un plan de travail 1.

Alternativement, la dalle d'accueil 2 peut être conçue de sorte que ladite surface soit inclinée lorsque la dalle d'accueil 2 est disposée sur une surface d'un plan de travail 1. Dans un tel cas, la dalle d'accueil 2 comprend en outre une retenue permettant de maintenir le terminal 21, ou son interface de communication, dans une position donnée sur ladite surface.

Une telle retenue peut comprendre un capteur, par exemple un capteur de poids permettant de détecter la présence d'un ou de plusieurs terminaux 21 ou interfaces de communication desdits terminaux 21 sur ladite surface, et éventuellement d'identifier un terminal, un type de terminal, un modèle de terminal, un type d'interface de communication de terminal ou un modèle d'interface de communication de terminal, par comparaison avec une indication de poids associée dans une base de données audit terminal, type de terminal, modèle de terminal, type d'interface de communication de terminal ou modèle d'interface de communication de terminal.

Le dispositif de communication peut en outre disposer d'un système de fixation du terminal 21 ou de son interface de communication. Par exemple, un tel système de fixation peut être prévu en tant qu'élément de la dalle d'accueil 2.

La dalle d'accueil comprend une pluralité de sources lumineuses 2a. L'interface de communication du terminal 21 comprend au moins une source lumineuse 21a.

Il est entendu que les sources lumineuses 2a, 21a sont :
- communicantes, en ce qu'elles peuvent transmettre des signaux,
- commandables, en ce que lesdits signaux peuvent être émis en réponse à une commande reçue, et
- adressables en ce qu'elles disposent, individuellement ou en groupe, à la fois d'une adresse propre telle qu'une adresse MAC et d'un port physique dédié.

Les sources lumineuses 2a, 21a peuvent être situées en visibilité directe ou visibles via un tunnel optique et peuvent être constituées par exemple de LED individuelles, ou de groupes de LED constituant un écran.

La dalle d'accueil comprend une pluralité de photorécepteurs 2b. L'interface de communication du terminal 21 comprend au moins un photorécepteur 21b.

Il est entendu que les photorécepteurs 2b, 21b sont également commandables et adressables individuellement ou en groupe.

Les photorécepteurs 2b, 21b peuvent être situés en visibilité directe ou être accessibles via un tunnel optique et peuvent être des photorécepteurs individuels ou former des groupes de photorécepteurs, chaque groupe constituant un capteur, tel qu'un capteur optique photo ou vidéo. Ainsi, par exemple, le terminal 21 peut être équipé d'un capteur optique en tant que « photorécepteur » 21b.

Les sources lumineuses 2a, 21a peuvent être conçues pour émettre dans au moins une bande de longueur d'onde qui peut appartenir par exemple au spectre visible et/ou au spectre infrarouge. L'au moins une source lumineuse 21a du terminal 21 est configurée pour communiquer par ondes lumineuses avec au moins une partie de la pluralité de photorécepteurs 2b de la dalle d'accueil 2. De plus, au moins une partie de la pluralité de sources lumineuses 2a de la dalle d'accueil 2 est configurée pour communiquer par ondes lumineuses avec l'au moins un photorécepteur 21b du terminal 21.

Il peut être en outre prévu de commander l'activation de la pluralité de photorécepteurs 2b et/ou de la pluralité de sources lumineuses 2a de la dalle d'accueil en réponse à une détection par le capteur de poids d'une mise en présence d'un terminal 21 ou de son interface de communication sur ladite surface.

Ainsi, la pluralité de photorécepteurs 2b et/ou la pluralité de sources lumineuses 2a de la dalle d'accueil 2 ne nécessitent pas d'être activés en permanence, ce qui procure les avantages économiques et écologiques associés à une minimisation de consommation énergétique.

Les sources lumineuses 2a sont inter-jacentes, individuellement ou par groupes, aux photorécepteurs 2b de manière à ce que la dalle d'accueil puisse être subdivisée en zones, chaque zone comprenant une partie de la pluralité de sources lumineuses 2a et une partie de la pluralité de photorécepteurs 2b. Ainsi, il est possible, pour chaque zone de la dalle d'accueil, d'appairer un terminal à une telle zone.

Dans l'exemple de mode de réalisation représenté sur la [Fig. 3], les sources lumineuses 2a et les photorécepteurs 2b sont répartis de manière à former un réseau matriciel comprenant un réseau de sources lumineuses entremêlé avec un réseau de photorécepteurs.

D'autres répartitions, homogènes ou inhomogènes, des sources lumineuses 2a et/ou des photorécepteurs 2b sont possibles.

En variante, si l'on se réfère à présent à la [Fig. 10], les photorécepteurs 2b peuvent appartenir à un capteur photo ou vidéo 25b. Ce capteur peut être placé derrière un écran à LED semi-transparent 25a comprenant les sources lumineuses 2a.

Le dispositif de communication peut comprendre un routeur 4 des sources lumineuses 2a et des photorécepteurs 2b, individuellement ou en groupe. Le routeur 4 permet d'orienter les modulations vers telle ou telle source lumineuse 2a ou partie d'écran, et d'accepter les modulations provenant de tel ou tel photorécepteur 2b ou partie de capteur photo ou vidéo en les orientant vers un modem ou un autre.

Le dispositif de communication comprend une unité centrale 5 comprenant au moins une mémoire et un processeur connecté à la mémoire et à au moins une interface de communication (par exemple le routeur 4) avec la dalle d'accueil 2. L'unité centrale 5 peut être en outre associée, par exemple intégrée, au plan de travail 1.

La mémoire de l'unité centrale 5 stocke une série d'instructions permettant à l'unité centrale 5, lorsque les instructions sont exécutées par le processeur, de sélectionner une partie de la pluralité de sources lumineuses 2a et/ou une partie de la pluralité de photorécepteurs 2b. Un exemple de mise en œuvre d'une telle sélection est un logiciel permettant à l'unité centrale 5 de piloter le routeur 4.

La mémoire de l'unité centrale 5 stocke en outre une série d'instructions permettant à l'unité centrale 5, lorsque les instructions sont exécutées par le processeur, de communiquer via un canal physique en Lumière Communicante avec une application d'appairage partenaire hébergée par le terminal 21.

L'unité centrale peut être raccordée à une passerelle réseau 3 permettant l'interfaçage entre le réseau en Lumière Communicante et au moins un réseau LAN/WAN externes, pour par exemple l'accès à internet des terminaux en Lumière Communicante.

L'unité centrale peut être raccordée à un modem 6 pour l'appairage entre une partie de la pluralité de sources lumineuses 2a et une partie de la pluralité de photorécepteurs 2b, d'une part, et le terminal 21, d'autre part.

Il est à présent également fait référence à la [Fig. 8] qui est un schéma de principe représentant des connexions et un fonctionnement d'un routeur d'un dispositif de communication selon un exemple de réalisation.

Dans cet exemple, la dalle d'accueil 2 comprend un réseau de dix LED en tant que sources lumineuses 2a et un réseau de dix photodiodes discrètes en tant que photorécepteurs 2b.

Le réseau de dix photodiodes discrètes est enchevêtré avec le réseau de dix LED.

Le routeur 4 comprend :
- un brasseur 19 des photodiodes, configuré pour recevoir un flux 9b de signaux électriques modulés issus des photodiodes 2b et indicatifs de signaux lumineux reçus par les photodiodes 2b,
- un additionneur de signaux 17 configuré pour recevoir du brasseur 19 des photodiodes un flux de signaux électriques modulés, sélectionnés par le brasseur 19 parmi le flux 9b, et à destination d'un modem Lumière Communicante vers LAN/WAN 3,
- un module 14 de mise en forme des signaux électriques modulés à destination du modem Lumière Communicante vers LAN/WAN 3,
- un additionneur de signaux 18 configuré pour recevoir du brasseur 19 des photodiodes un flux de signaux électriques modulés, sélectionnés par le brasseur 19 parmi le flux 9b, et à destination d'un modem d'appairage 6,
- un module 15 de mise en forme des signaux électriques modulés à destination du modem d'appairage 6.

Le routeur 4 comprend en outre un brasseur/duplicateur 20 des LED configuré pour :
- recevoir du modem Lumière Communicante vers LAN/WAN 3 un flux analogique 8 d'échange de données en accès LAN/WAN,
- recevoir du modem d'appairage 6 un flux analogique 12 d'échange de données en appairage,
- recevoir de l'unité centrale 5 un flux numérique de commandes 11, et
- émettre un flux de courants modulés 9a vers les LED 2a sur la base du flux analogique 8 d'échange de données en accès LAN/WAN, du flux analogique 12 d'échange de données en appairage et du flux numérique de commandes 11.

Quand un convertisseur série/parallèle 16 reçoit une commande de configuration du routeur 4 sur son interface sérielle, il sépare la commande en deux composantes, l'une destinée à un brasseur/duplicateur 20 des LED et l'autre à un brasseur 19 des photodiodes.

Pour le brasseur/duplicateur 20 des LED, il peut être prévu de se baser sur les valeurs de deux bits de la commande, ci-après « bit d » et « bit e » pour sélectionner la nature des signaux à émettre par les LED 2a. Ainsi, il peut être prévu que si le bit d est à 1, les LED 2a associées aux sorties f0 à f9 dont le bit est à 1 seront utilisées pour un accès LAN/WAN, et si le bit e est à 1, les LED 2a associées aux sorties f0 à f9 dont le bit est à 1 seront utilisées pour une communication d'appairage.

Pour le brasseur des photodiodes, il peut être prévu de se baser sur les valeurs de deux bits de la commande, ci-après « bit a » et « bit b », pour l'interprétation des signaux reçus par les photodiodes 2b. Ainsi, il peut être prévu que si le bit a est à 1, les photodiodes associées aux entrées c0 à c9 dont le bit est à 1 seront utilisées pour un accès LAN/WAN, et si le bit b est à 1, les photodiodes associées aux entrées c0 à c9 dont le bit est à 1 seront utilisées pour une communication d'appairage.

Pour sa part, ici, l'unité centrale 5 procède le cas échéant par salves de deux messages, le premier concernant par exemple les bits b et e avec une sélection de photodiodes et de LED pour la communication d'appairage, et le second concernant par exemple les bits a et d avec une sélection de photodiodes et de LED pour la communication d'accès LAN/WAN, tout en s'assurant du non doublonnage dans ces sélections.

L'utilisation et le fonctionnement du dispositif décrit ci-dessus peuvent par exemple être décrits de la manière suivante, en référence à la [Fig. 7].

L'interface Lumière Communicante occupe une partie arbitrairement large du plan de travail et est initialement dans l'état suivant :
- en veille côté sources lumineuses 2a, et
- en écoute permanente ou périodique sur tous les photorécepteurs 2b.

L'utilisateur positionne l'interface Lumière Communicante de son terminal sur la partie arbitrairement large du plan de travail qui permet de communiquer en Lumière Communicante, en vis-à-vis de celle-ci, tel que représenté par exemple sur la [Fig. 4].

L'utilisateur lance sur son terminal 21 l'application d'appairage ad hoc App Appair, qui commande l'émission, par l'au moins une source lumineuse 21a, d'un signal lumineux d'initialisation SIGN INIT en ce qu'il permet d'initialiser un contact avec le dispositif de communication.

Par exemple, le signal lumineux d'initialisation SIGN INIT peut transporter une séquence de demandes d'appairage associées à un identifiant (par exemple une adresse MAC) propre au terminal 21.

L'unité centrale 5 du dispositif de communication reçoit et décode ces demandes successives et détermine SELEC REC lequel ou lesquels des photorécepteurs 2b ou des pixels du capteur optique reçoit ou reçoivent le signal lumineux d'initialisation SIGN INIT, si besoin est en les sélectionnant successivement un à un ou groupe par groupe SCAN.

L'unité centrale 5 commande alors en retour l'émission de signaux d'appairage SIGN APPAIR en sélectionnant successivement une à une ou groupe par groupe les LED 2a ou pixels d'émission, et en insérant par exemple dans ces réponses l'adresse (par exemple une adresse MAC) individuelle ou de groupe des LED et pixels concernés.

Dans l'exemple ci-dessus où le signal lumineux d'initialisation transporte une séquence de demandes d'appairage, les signaux d'appairage émis par les LED 2a transportent chacun une réponse à une demande d'appairage reçue. Il peut être prévu d'insérer par exemple dans ces réponses l'adresse (par exemple une adresse MAC) individuelle ou de groupe des LED et pixels concernés.

L'application d'appairage du terminal mobile 21 reçoit REC APPAIR un ou quelques-uns des signaux d'appairage émis par les LED 2a via son interface Lumière Communicante, en particulier via au moins un photorécepteur 21b, et renvoie REP APPAIR via celle-ci à l'application du dispositif de communication, dans un message d'appairage, l'adresse ou les adresses reçues (par exemple des adresses MAC).

Le dispositif de communication 2 peut alors :
- décoder ce message d'appairage,
- déterminer sur cette base SELEC EM les LED 2a dont les signaux d'appairage ont été correctement reçus et renvoyés par le terminal 21, et ainsi
- commander ROUT EM REC l'aiguillage des modulations et démodulations de Lumière Communicante de et vers le réseau LAN/WAN pour les seuls LED, pixels et photorécepteurs concernés.

Les autres éléments de communication ne sont dès lors plus utilisés pour la connexion en Lumière Communicante.

L'application d'appairage du terminal 21 peut alors ouvrir APPAIR OK le canal de communication en Lumière Communicante vers le réseau, et ouvrir une session de communication LAN/WAN COM avec le réseau, en utilisant par exemple un protocole tel que l'IEEE 802.11bb ou l'IEEE 802.15.7.

Dans certains modes de réalisation, parallèlement, selon une périodicité arbitraire, l'application d'appairage du terminal réémet des messages de demande d'appairage,

Dans certains modes de réalisation, parallèlement, selon une autre périodicité arbitraire, l'application du plan de travail teste les éléments Lumière Communicante voisins en répétant la séquence de détection de demandes d'appairage, ce qui permet d'assurer un handover local et rapide, car traité au niveau le plus bas (circuit court), en cas de déplacement tel que représenté par exemple sur la [Fig. 5] du terminal ou de son interface en Lumière Communicante sur le plan de travail, par changement du côté plan de travail des LED, pixels et photorécepteurs assurant la communication lumineuse.

Dans certains modes de réalisation, parallèlement, selon une autre périodicité arbitraire, l'application du plan de travail teste les éléments Lumière Communicante voisins en répétant la séquence de détection de demandes d'appairage pour s'assurer au niveau local de l'éventuelle présence, telle que représentée par exemple sur la [Fig. 6], d'un autre terminal Lumière Communicante sur le plan de travail, porteur d'un autre identifiant pour son application d'appairage.

Ainsi, la partie active du plan de travail assurant seule l'émission lumineuse peut rester cachée par le terminal posé sur ce plan de travail, tout en se poursuivant même lorsqu'il est déplacé, ce qui apporte le double avantage de la confidentialité au niveau physique de la communication et du non-éblouissement des utilisateurs lorsqu'ils doivent travailler dans un environnement sombre ou nocturne.

Dans certains modes de réalisation, les dispositifs matériels et logiciels pilotes (driver) du capteur photo/vidéo et de l'écran à LED semi-transparent peuvent être intégrés au sein d'un équipement unique, tel qu'un nano-ordinateur courant de type Raspberry Pi ou un arduino.

Dans certains modes de réalisation, l'application gérant l'interface Lumière Communicante réseau pourra, si elle reçoit les signaux du terminal sur plusieurs de ses photorécepteurs, limiter l'utilisation de ses ressources de réception et de démodulation pour la session de communication entre le terminal et le réseau à un nombre réduit de ces photorécepteurs, choisis pour être situés au plus proche du barycentre des photorécepteurs concernés.

Dans certains modes de réalisation, alternatifs ou complémentaires au précédent, l'application gérant l'interface Lumière Communicante réseau pourra, si elle reçoit les signaux du terminal sur plusieurs de ses photorécepteurs, limiter l'utilisation de ses ressources de réception et de démodulation pour la session de communication entre le terminal et le réseau à un nombre réduit de ces photorécepteurs, choisis pour recevoir une puissance lumineuse plus importante que les autres.

Dans certains modes de réalisation, l'application gérant l'interface Lumière Communicante réseau pourra, si elle reçoit du terminal une information suivant laquelle il reçoit un signal émanant de plusieurs de ses photoémetteurs, LED ou pixels d'écran, limiter l'utilisation de ses ressources d'émission et de modulation pour la session de communication entre le terminal et le réseau à un nombre réduit de ces photoémetteurs, choisis pour être situés au plus proche du barycentre des photoémetteurs concernés.

Dans certains modes de réalisation, l'application gérant l'interface Lumière Communicante réseau pourra héberger une table de correspondance associant en une même cartographie (topologie) les éléments photoémetteurs et photorécepteurs qu'elle gère, cela lui permettant de limiter ses émissions de la séquence d'appairage aux seules LED ou pixels d'écran associés topologiquement aux photorécepteurs recevant un signal du terminal.

Dans certains modes de réalisation, les demandes d'appairage seront opérées par le plan de travail, et les réponses par le terminal, par exemple sur détection d'un contact sur le plan de travail (par le terminal, par l'utilisateur).

Dans certains modes de réalisation, l'utilisateur pourra ajuster directement la valeur de la surface de la zone de communication lumineuse du plan de travail, soit par un dispositif de commande disposé sur celui-ci, soit via une commande accessible sur l'interface utilisateur de l'application d'appairage du terminal.

Dans certains modes de réalisation, la puissance lumineuse mise en jeux pour la procédure d'appairage pourra avantageusement être réduite par rapport à celle requise pour communiquer avec le réseau LAN/WAN, de façon à ne pas éblouir les utilisateurs.

Dans certains modes de réalisation, la fréquence lumineuse mise en jeu pour la procédure d'appairage pourra avantageusement être différente (rouge ou infrarouge par exemple) de celle requise pour communiquer avec le réseau LAN/WAN, de façon à ne pas éblouir ou gêner les utilisateurs.

Dans certains modes de réalisation, les modems d'appairage 3 et LAN/WAN 6 pourront être combinés en un seul équipement unique supportant ces deux fonctions.

Dans certains modes de réalisation, tels qu'illustrés en [Fig. 2], [Fig. 9] et [Fig. 11], le modem 3 supportant l'appairage et l'unité centrale 5 pourront être combinés en un seul équipement unique supportant ces deux fonctions.

Dans certains modes de réalisation, la procédure d'appairage pourra être accélérée en procédant en plusieurs étapes, plutôt qu'en procédant par un balayage global de l'ensemble des LED, photodiodes ou pixels : les adresses (MAC par exemple) seront ainsi variables et affectées à des groupes de ces éléments, de plus en plus petits à chaque étape du processus pour laquelle on ne sélectionne que les éléments « répondants », jusqu'à descendre au niveau élémentaire approprié, par exemple celui d'une LED et d'une photodiode discrète, ou d'un petit groupe de pixels.

La présente divulgation ne se limite pas aux exemples décrits ci-avant à l'appui des figures, seulement présentées à titre d'exemple aux fins de faciliter la compréhension de l'invention, mais elle englobe toutes les variantes que pourra envisager l'homme de l'art dans le cadre de la protection recherchée.

## Revendications

1. Dispositif de communication comportant :
- une dalle d'accueil (2) comprenant une pluralité de photorécepteurs (2b) et une pluralité de sources lumineuses (2a) inter-jacentes avec les photorécepteurs, la pluralité de photorécepteurs et la pluralité de sources lumineuses étant adaptées pour une communication optique en espace libre, et
- une unité centrale (5), raccordée à la dalle d'accueil, où l'unité centrale est configurée pour, lorsqu'une partie de la pluralité de photorécepteurs de la dalle d'accueil reçoit un signal lumineux d'au moins une source lumineuse d'une interface de communication optique en espace libre d'un terminal (21) non appairé avec la dalle d'accueil :
- obtenir un signal d'initialisation comprenant une identification de ladite partie de la pluralité de photorécepteurs,
- sélectionner, parmi la pluralité de sources lumineuses de la dalle d'accueil, une partie de la pluralité de sources lumineuses à proximité immédiate de ladite partie de la pluralité de photorécepteurs, sur la base de ladite identification,
- commander une émission d'un signal d'appairage par ladite partie de la pluralité de sources lumineuses,
- obtenir un signal de réponse, indicatif d'un signal émis par ladite interface de communication optique en espace libre dudit terminal en réponse à l'émission du signal d'appairage et reçu par ladite partie de la pluralité de photorécepteurs de la dalle d'accueil,
- commander un appairage dudit terminal à ladite partie de la pluralité de photorécepteurs de la dalle d'accueil et à ladite partie de la pluralité de sources lumineuses de la dalle d'accueil sur la base du signal de réponse, et
- l'unité centrale étant en outre configurée pour, le terminal étant appairé à ladite partie de la pluralité de sources lumineuses, commander une émission d'un signal dédié à la réévaluation de la position du terminal par rapport à la dalle d'accueil.

2. Dispositif de communication selon la revendication précédente, comprenant un modem (6) raccordé à l'unité centrale, le modem étant configuré pour :
- recevoir la commande d'émission d'un signal d'appairage par l'unité centrale,
- commander l'émission du signal d'appairage par ladite partie de la pluralité de sources lumineuses de la dalle d'accueil, et
- recevoir la commande d'appairage par l'unité centrale.

3. Dispositif de communication selon l'une des revendications précédentes, comprenant une passerelle réseau (3) raccordée à l'unité centrale, la passerelle réseau étant configurée, lorsque la communication réseau entre ledit terminal appairé et la passerelle réseau est autorisée par l'unité centrale, pour :
- former un canal physique de communication optique en espace libre entre ladite partie de la pluralité de photorécepteurs et ledit terminal appairé, et
- établir une communication entre le canal physique de communication optique en espace libre et un réseau étendu WAN.

4. Dispositif de communication selon l'une des revendications précédentes, l'unité centrale étant en outre configurée pour émettre de manière périodique une commande d'émission d'un signal de confirmation, le signal de confirmation étant identique au signal d'appairage et émis par ladite partie de la pluralité de sources lumineuses.

5. Dispositif de communication selon l'une des revendications précédentes, l'unité centrale étant en outre configurée pour émettre de manière périodique une commande d'émission d'un signal de détection de déplacement, le signal de détection étant identique au signal d'appairage et émis par une partie non appairée adjacente à ladite partie de la pluralité de sources lumineuses de la dalle d'accueil.

6. Dispositif de communication selon l'une des revendications précédentes, l'unité centrale étant en outre configurée pour commander une émission d'un signal d'appairage modifié, différent du signal d'appairage et émis par une partie non appairée de ladite partie de la pluralité de sources lumineuses de la dalle d'accueil.

7. Dispositif de communication selon l'une des revendications précédentes, dans lequel le signal d'appairage est émis dans une première bande de longueur d'onde et le canal physique de communication optique en espace libre est actif dans une deuxième bande de longueur d'onde, la première et la deuxième bandes de longueur d'onde étant mutuellement exclusives.

8. Procédé d'appairage d'un terminal à une dalle d'accueil comprenant une pluralité de photorécepteurs et une pluralité de sources lumineuses inter-jacentes avec les photorécepteurs, la pluralité de photorécepteurs et la pluralité de sources lumineuses étant adaptées pour une communication optique en espace libre, le procédé comprenant, lorsqu'une partie de la pluralité de photorécepteurs de la dalle d'accueil reçoit un signal lumineux d'au moins une source lumineuse d'une interface de communication optique en espace libre du terminal et que le terminal est non appairé à la dalle d'accueil:
- obtenir un signal d'initialisation comprenant une identification de ladite partie de la pluralité de photorécepteurs,
- sélectionner, parmi la pluralité de sources lumineuses de la dalle d'accueil, une partie de la pluralité de sources lumineuses à proximité immédiate de ladite partie de la pluralité de photorécepteurs, sur la base de ladite identification,
- commander une émission d'un signal d'appairage par ladite partie de la pluralité de sources lumineuses,
- obtenir un signal de réponse, indicatif d'un signal émis par ladite interface de communication optique en espace libre dudit terminal en réponse à l'émission du signal d'appairage et reçu par ladite partie de la pluralité de photorécepteurs de la dalle d'accueil,
- commander un appairage dudit terminal à ladite partie de la pluralité de photorécepteurs de la dalle d'accueil et à ladite partie de la pluralité de sources lumineuses de la dalle d'accueil sur la base du signal de réponse, et
le procédé comprenant en outre, le terminal étant appairé à ladite partie de la pluralité de sources lumineuses, commander une émission d'un signal dédié à la réévaluation de la position du terminal par rapport à la dalle d'accueil.

9. Procédé d'appairage selon la revendication précédente, le terminal comprenant en outre un circuit de traitement raccordé à au moins un photorécepteur (21b) et à ladite au moins une source lumineuse (21a), le procédé comprenant en outre :
- commander, par le circuit de traitement, l'émission du signal lumineux par ladite au moins une source lumineuse du terminal,
- obtenir, par le circuit de traitement, le signal d'appairage par ledit au moins un photorécepteur du terminal, et
- commander, par le circuit de traitement, l'émission du signal de réponse en réponse au signal d'appairage.

10. Système comprenant un dispositif selon l'une des revendications 1 à 7 et un terminal (21) comprenant une interface de communication optique en espace libre.

11. Programme informatique comportant des instructions pour la mise en œuvre du procédé d'appairage selon l'une des revendications 8 ou 9, lorsque lesdites instructions sont exécutées par un processeur.

12. Unité centrale (5) d'un dispositif selon l'une des revendications 1 à 7, l'unité centrale comprenant un processeur connecté à une mémoire et à au moins une interface de communication avec une dalle d'accueil (2), ladite dalle d'accueil comprenant une pluralité de photorécepteurs (2b) et une pluralité de sources lumineuses (2a) inter-jacentes avec les photorécepteurs, la pluralité de photorécepteurs et la pluralité de sources lumineuses étant adaptées pour une communication optique en espace libre, l'unité centrale étant configurée pour, lorsqu'une partie de la pluralité de photorécepteurs de la dalle d'accueil reçoit un signal lumineux d'au moins une source lumineuse d'une interface de communication optique en espace libre d'un terminal (21) non appairé avec la dalle d'accueil :
- obtenir un signal d'initialisation comprenant une identification de ladite partie de la pluralité de photorécepteurs,
- sélectionner, parmi la pluralité de sources lumineuses de la dalle d'accueil, une partie de la pluralité de sources lumineuses à proximité immédiate de ladite partie de la pluralité de photorécepteurs, sur la base de ladite identification,
- commander une émission d'un signal d'appairage par ladite partie de la pluralité de sources lumineuses,
- obtenir un signal de réponse, indicatif d'un signal émis par ladite interface de communication optique en espace libre dudit terminal en réponse à l'émission du signal d'appairage et reçu par ladite partie de la pluralité de photorécepteurs de la dalle d'accueil,
- commander un appairage dudit terminal à ladite partie de la pluralité de photorécepteurs de la dalle d'accueil et à ladite partie de la pluralité de sources lumineuses de la dalle d'accueil sur la base du signal de réponse, et
l'unité centrale étant configurée pour, le terminal étant appairé à ladite partie de la pluralité de sources lumineuses, commander une émission d'un signal dédié à la réévaluation de la position du terminal par rapport à la dalle d'accueil.

## Patentansprüche

1. Kommunikationsvorrichtung, die Folgendes umfasst:
- eine Aufnahmeplatte (2), die eine Vielzahl von Fotorezeptoren (2b) und eine Vielzahl von zwischen den Fotorezeptoren angeordneten Lichtquellen (2a) beinhaltet, wobei die Vielzahl von Fotorezeptoren und die Vielzahl von Lichtquellen für eine optische Freiraumkommunikation angepasst sind, und
- eine Zentraleinheit (5), die mit der Aufnahmeplatte verbunden ist, wobei die Zentraleinheit, wenn ein Teil der Vielzahl von Fotorezeptoren der Aufnahmeplatte ein Lichtsignal von mindestens einer Lichtquelle einer Schnittstelle zur optischen Freiraumkommunikation eines mit der Aufnahmeplatte nicht gekoppelten Endgeräts (21) empfängt, für Folgendes konfiguriert ist:
- Erhalten eines Initialisierungssignals, das eine Identifikation des Teils der Vielzahl von Fotorezeptoren beinhaltet,
- Auswählen, aus der Vielzahl von Lichtquellen der Aufnahmeplatte, eines Teils der Vielzahl von Lichtquellen in unmittelbarer Nähe des Teils der Vielzahl von Fotorezeptoren auf der Grundlage der Identifikation,
- Anweisen des Sendens eines Kopplungssignals durch den Teil der Vielzahl von Lichtquellen,
- Erhalten eines Antwortsignals, das für ein Signal indikativ ist, das durch die Schnittstelle zur optischen Freiraumkommunikation des Endgeräts als Reaktion auf das Senden des Kopplungssignals gesendet wird und durch den Teil der Vielzahl von Fotorezeptoren der Aufnahmeplatte empfangen wird,
- Anweisen einer Kopplung des Endgeräts mit dem Teil der Vielzahl von Fotorezeptoren der Aufnahmeplatte und mit dem Teil der Vielzahl von Lichtquellen der Aufnahmeplatte auf der Grundlage des Antwortsignals und
- wobei die Zentraleinheit ferner dazu konfiguriert ist, wenn das Endgerät mit dem Teil der Vielzahl von Lichtquellen gekoppelt ist, das Senden eines Signals anzuweisen, das der Neubewertung der Position des Endgeräts in Bezug auf die Aufnahmeplatte dient.

2. Kommunikationsvorrichtung nach dem vorhergehenden Anspruch, beinhaltend ein Modem (6), das mit der Zentraleinheit verbunden ist, wobei das Modem für Folgendes konfiguriert ist:
- Empfangen der Anweisung zum Senden eines Kopplungssignals durch die Zentraleinheit,
- Anweisen des Sendens des Kopplungssignals durch den Teil der Vielzahl von Lichtquellen der Aufnahmeplatte und
- Empfangen der Kopplungsanweisung durch die Zentraleinheit.

3. Kommunikationsvorrichtung nach einem der vorhergehenden Ansprüche, beinhaltend ein Netzwerk-Gateway (3), das mit der Zentraleinheit verbunden ist, wobei das Netzwerk-Gateway, wenn die Netzwerkkommunikation zwischen dem gekoppelten Endgerät und dem Netzwerk-Gateway durch die Zentraleinheit autorisiert wird, für Folgendes konfiguriert ist:
- Bilden eines physikalischen optischen Freiraumkommunikationskanals zwischen dem Teil der Vielzahl von Fotorezeptoren und dem gekoppelten Endgerät und
- Herstellen einer Kommunikation zwischen dem physikalischen optischen Freiraumkommunikationskanal und einem WAN-Wide-Area-Netzwerk.

4. Kommunikationsvorrichtung nach einem der vorhergehenden Ansprüche, wobei die Zentraleinheit ferner konfiguriert ist, um periodisch eine Anweisung zum Senden eines Bestätigungssignals zu senden, wobei das Bestätigungssignal mit dem Kopplungssignal identisch ist und durch den Teil der Vielzahl von Lichtquellen gesendet wird.

5. Kommunikationsvorrichtung nach einem der vorhergehenden Ansprüche, wobei die Zentraleinheit ferner konfiguriert ist, um periodisch eine Anweisung zum Senden eines Bewegungsdetektionssignals zu senden, wobei das Detektionssignal mit dem Kopplungssignal identisch ist und durch einen nicht gekoppelten Teil angrenzend an den Teil der Vielzahl von Lichtquellen der Aufnahmeplatte gesendet wird.

6. Kommunikationsvorrichtung nach einem der vorhergehenden Ansprüche, wobei die Zentraleinheit ferner konfiguriert ist, um das Senden eines modifizierten Kopplungssignals anzuweisen, das sich von dem Kopplungssignal unterscheidet und durch einen nicht gekoppelten Teil des Teils der Vielzahl von Lichtquellen der Aufnahmeplatte gesendet wird.

7. Kommunikationsvorrichtung nach einem der vorhergehenden Ansprüche, wobei das Kopplungssignal in einem ersten Wellenlängenband gesendet wird und der physikalische optische Freiraumkommunikationskanal in einem zweiten Wellenlängenband aktiv ist, wobei sich das erste und das zweite Wellenlängenband gegenseitig ausschließen.

8. Verfahren zur Kopplung eines Endgeräts mit einer Aufnahmeplatte, die eine Vielzahl von Fotorezeptoren und eine Vielzahl von zwischen den Fotorezeptoren angeordneten Lichtquellen beinhaltet, wobei die Vielzahl von Fotorezeptoren und die Vielzahl von Lichtquellen für eine optische Freiraumkommunikation angepasst sind, wobei das Verfahren, wenn ein Teil der Vielzahl von Fotorezeptoren der Aufnahmeplatte ein Lichtsignal von mindestens einer Lichtquelle einer Schnittstelle zur optischen Freiraumkommunikation des Endgeräts empfängt und das Endgerät mit der Aufnahmeplatte nicht gekoppelt ist, Folgendes beinhaltet:
- Erhalten eines Initialisierungssignals, das eine Identifikation des Teils der Vielzahl von Fotorezeptoren beinhaltet,
- Auswählen, aus der Vielzahl von Lichtquellen der Aufnahmeplatte, eines Teils der Vielzahl von Lichtquellen in unmittelbarer Nähe des Teils der Vielzahl von Fotorezeptoren auf der Grundlage der Identifikation,
- Anweisen des Sendens eines Kopplungssignals durch den Teil der Vielzahl von Lichtquellen,
- Erhalten eines Antwortsignals, das für ein Signal indikativ ist, das durch die Schnittstelle zur optischen Freiraumkommunikation des Endgeräts als Reaktion auf das Senden des Kopplungssignals gesendet wird und durch den Teil der Vielzahl von Fotorezeptoren der Aufnahmeplatte empfangen wird,
- Anweisen einer Kopplung des Endgeräts mit dem Teil der Vielzahl von Fotorezeptoren der Aufnahmeplatte und mit dem Teil der Vielzahl von Lichtquellen der Aufnahmeplatte auf der Grundlage des Antwortsignals und wobei das Verfahren ferner, wenn das Endgerät mit dem Teil der Vielzahl von Lichtquellen gekoppelt ist, das Anweisen des Sendens eines Signals beinhaltet, das der Neubewertung der Position des Endgeräts in Bezug auf die Aufnahmeplatte dient.

9. Kopplungsverfahren nach dem vorhergehenden Anspruch, wobei das Endgerät ferner eine Verarbeitungsschaltung beinhaltet, die mit mindestens einem Fotorezeptor (21b) und mit der mindestens einen Lichtquelle (21a) verbunden ist, wobei das Verfahren ferner Folgendes beinhaltet:
- Anweisen, durch die Verarbeitungsschaltung, des Sendens des Lichtsignals durch die mindestens eine Lichtquelle des Endgeräts,
- Erhalten, durch die Verarbeitungsschaltung, des Kopplungssignals durch den mindestens einen Fotorezeptor des Endgeräts und
- Anweisen, durch die Verarbeitungsschaltung, des Sendens des Antwortsignals als Reaktion auf das Kopplungssignal.

10. System, beinhaltend eine Vorrichtung nach einem der Ansprüche 1 bis 7 und ein Endgerät (21), das eine Schnittstelle zur optischen Freiraumkommunikation beinhaltet.

11. Computerprogramm, das Anweisungen umfasst, um das Kopplungsverfahren nach einem der Ansprüche 8 oder 9 zu implementieren, wenn die Anweisungen durch einen Prozessor ausgeführt werden.

12. Zentraleinheit (5) einer Vorrichtung nach einem der Ansprüche 1 bis 7, wobei die Zentraleinheit einen Prozessor beinhaltet, der mit einem Speicher und mit mindestens einer Schnittstelle zur Kommunikation mit einer Aufnahmeplatte (2) verbunden ist, wobei die Aufnahmeplatte eine Vielzahl von Fotorezeptoren (2b) und eine Vielzahl von zwischen den Fotorezeptoren angeordneten Lichtquellen (2a) umfasst, wobei die Vielzahl von Fotorezeptoren und die Vielzahl von Lichtquellen für eine optische Freiraumkommunikation angepasst sind, wobei die Zentraleinheit, wenn ein Teil der Vielzahl von Fotorezeptoren der Aufnahmeplatte ein Lichtsignal von mindestens einer Lichtquelle einer Schnittstelle zur optischen Freiraumkommunikation eines Endgeräts (21) empfängt, das nicht mit der Aufnahmeplatte gekoppelt ist, zu Folgendem konfiguriert ist:
- Erhalten eines Initialisierungssignals, das eine Identifikation des Teils der Vielzahl von Fotorezeptoren beinhaltet,
- Auswählen, aus der Vielzahl von Lichtquellen der Aufnahmeplatte, eines Teils der Vielzahl von Lichtquellen in unmittelbarer Nähe des Teils der Vielzahl von Fotorezeptoren auf der Grundlage der Identifikation,
- Anweisen des Sendens eines Kopplungssignals durch den Teil der Vielzahl von Lichtquellen,
- Erhalten eines Antwortsignals, das für ein Signal indikativ ist, das durch die Schnittstelle zur optischen Freiraumkommunikation des Endgeräts als Reaktion auf das Senden des Kopplungssignals gesendet wird und durch den Teil der Vielzahl von Fotorezeptoren der Aufnahmeplatte empfangen wird,
- Anweisen einer Kopplung des Endgeräts mit dem Teil der Vielzahl von Fotorezeptoren der Aufnahmeplatte und mit dem Teil der Vielzahl von Lichtquellen der Aufnahmeplatte auf der Grundlage des Antwortsignals und wobei die Zentraleinheit, wenn das Endgerät mit dem Teil der Vielzahl von Lichtquellen gekoppelt ist, dazu konfiguriert ist, das Senden eines Signals anzuweisen, das der Neubewertung der Position des Endgeräts in Bezug auf die Aufnahmeplatte dient.

## Claims

1. Communication device comprising:
- a docking panel (2) comprising a plurality of photoreceptors (2b) and a plurality of light sources (2a) interjacent with the photoreceptors, the plurality of photoreceptors and the plurality of light sources being suitable for free-space optical communication, and
- a system unit (5), connected to the docking panel, the system unit being configured, when a portion of the plurality of photoreceptors of the docking panel receives a light signal from at least one light source of a free-space-optical-communication interface of a terminal (21) not paired with the docking panel:
- to obtain an initialization signal comprising an identification of said portion of the plurality of photoreceptors,
- to select, among the plurality of light sources of the docking panel, a portion of the plurality of light sources in immediate proximity to said portion of the plurality of photoreceptors, based on said identification,
- to command emission of a pairing signal by said portion of the plurality of light sources,
- to obtain a response signal indicative of a signal emitted by said free-space-optical-communication interface of said terminal in response to the emission of the pairing signal and received by said portion of the plurality of photoreceptors of the docking panel,
- to command pairing of said terminal to said portion of the plurality of photoreceptors of the docking panel and to said portion of the plurality of light sources of the docking panel based on the response signal, and
- the system unit further being configured, once the terminal has been paired with said portion of the plurality of light sources, to command emission of a signal dedicated to re-evaluation of the position of the terminal with respect to the docking panel.

2. Communication device according to the preceding claim, comprising a modem (6) connected to the system unit, the modem being configured:
- to receive the command for the system unit to emit a pairing signal,
- to command said portion of the plurality of light sources of the docking panel to emit the pairing signal, and
- to receive the command for the system unit to pair.

3. Communication device according to either of the preceding claims, comprising a network gateway (3) connected to the system unit, the network gateway being configured, when network communication between said paired terminal and the network gateway is permitted by the system unit:
- to form a physical free-space-optical-communication channel between said portion of the plurality of photoreceptors and said paired terminal, and
- to set up a communication between the physical free-space-optical-communication channel and a wide-area network (WAN).

4. Communication device according to any of the preceding claims, the system unit further being configured to periodically generate a command to emit a confirmation signal, the confirmation signal being identical to the pairing signal and being emitted by said portion of the plurality of light sources.

5. Communication device according to any of the preceding claims, the system unit further being configured to periodically generate a command to emit a movement-detection signal, the detection signal being identical to the pairing signal and being emitted by an unpaired portion adjacent to said portion of the plurality of light sources of the docking panel.

6. Communication device according to any of the preceding claims, the system unit further being configured to command emission of a modified pairing signal, different from the pairing signal and emitted by an unpaired portion of said portion of the plurality of light sources of the docking panel.

7. Communication device according to any of the preceding claims, wherein the pairing signal is emitted in a first wavelength band and the physical free-space-optical-communication channel is active in a second wavelength band, the first and the second wavelength bands being mutually exclusive.

8. Method for pairing a terminal to a docking panel comprising a plurality of photoreceptors and a plurality of light sources interjacent with the photoreceptors, the plurality of photoreceptors and the plurality of light sources being suitable for free-space optical communication, the method comprising, when a portion of the plurality of photoreceptors of the docking panel receives a light signal from at least one light source of a free-space-optical-communication interface of the terminal and when the terminal is unpaired with the docking panel:
- to obtain an initialization signal comprising an identification of said portion of the plurality of photoreceptors,
- to select, among the plurality of light sources of the docking panel, a portion of the plurality of light sources in immediate proximity to said portion of the plurality of photoreceptors, based on said identification,
- to command emission of a pairing signal by said portion of the plurality of light sources,
- to obtain a response signal indicative of a signal emitted by said free-space-optical-communication interface of said terminal in response to the emission of the pairing signal and received by said portion of the plurality of photoreceptors of the docking panel,
- to command pairing of said terminal to said portion of the plurality of photoreceptors of the docking panel and to said portion of the plurality of light sources of the docking panel based on the response signal, and
the method further comprising, once the terminal has been paired with said portion of the plurality of light sources, commanding emission of a signal dedicated to re-evaluation of the position of the terminal with respect to the docking panel.

9. Pairing method according to the preceding claim, the terminal further comprising a processing circuit connected to at least one photoreceptor (21b) and to said at least one light source (21a), the method further comprising:
- commanding, by means of the processing circuit, emission of the light signal by said at least one light source of the terminal,
- obtaining, by means of the processing circuit, the pairing signal with said at least one photoreceptor of the terminal, and
- commanding, by means of the processing circuit, emission of the response signal in response to the pairing signal.

10. System comprising a device according to any of Claims 1 to 7 and a terminal (21) comprising a free-space-optical-communication interface.

11. Computer program containing instructions for implementing the pairing method according to either of Claims 8 and 9 when said instructions are executed by a processor.

12. System unit (5) of a device according to any of Claims 1 to 7, the system unit comprising a processor connected to a memory and to at least one communication interface enabling communication with a docking panel (2), said docking panel comprising a plurality of photoreceptors (2b) and a plurality of light sources (2a) interjacent with the photoreceptors, the plurality of photoreceptors and the plurality of light sources being suitable for free-space optical communication, the system unit being configured, when a portion of the plurality of photoreceptors of the docking panel receives a light signal from at least one light source of a free-space-optical-communication interface of a terminal (21) not paired with the docking panel:
- to obtain an initialization signal comprising an identification of said portion of the plurality of photoreceptors,
- to select, among the plurality of light sources of the docking panel, a portion of the plurality of light sources in immediate proximity to said portion of the plurality of photoreceptors, based on said identification,
- to command emission of a pairing signal by said portion of the plurality of light sources,
- to obtain a response signal indicative of a signal emitted by said free-space-optical-communication interface of said terminal in response to the emission of the pairing signal and received by said portion of the plurality of photoreceptors of the docking panel,
- to command pairing of said terminal to said portion of the plurality of photoreceptors of the docking panel and to said portion of the plurality of light sources of the docking panel based on the response signal, and
the system unit being configured, once the terminal has been paired with said portion of the plurality of light sources, to command emission of a signal dedicated to re-evaluation of the position of the terminal with respect to the docking panel.
